Europäisches Patentamt

European Patent Office

Office européen des brevets

(19)

(11) **EP 1 391 770 B1**

(12) **EUROPEAN PATENT SPECIFICATION**

(45) Date of publication and mention
of the grant of the patent:
**14.12.2005 Bulletin 2005/50**

(51) Int Cl.⁷: **G02B 26/12**, B41J 2/47

(21) Application number: **03253569.2**

(22) Date of filing: **05.06.2003**

(54) **Sub-scanning interval adjusting device for multi-beam image forming apparatus**

Vorrichtung zur Einstellung der Schrittweite in der Unterabtastrichtung eines mehrstrahligen
Bilderzeugungsgerät

Dispositif d'ajustement d'une fraction du pas de balayage dans un dispositif de formation d'image à
faisceaux multiples

(84) Designated Contracting States:
**DE FR GB NL**

(30) Priority: **23.08.2002 KR 2002049961**

(43) Date of publication of application:
**25.02.2004 Bulletin 2004/09**

(73) Proprietor: **SAMSUNG ELECTRONICS CO., LTD.
Suwon-si, Gyeonggi-do 442-742 (KR)**

(72) Inventor: **Yoo, Jae-hwan
Giheung-eup, Yongin-city, Gyunggi-do (KR)**

(74) Representative: **Geary, Stuart Lloyd et al
Venner Shipley LLP
20 Little Britain
London EC1A 7DH (GB)**

(56) References cited:
**EP-A- 0 703 088        US-A- 4 878 066
US-A- 5 818 496        US-A- 5 844 591**

• **DATABASE WPI Section PQ, Week 200263
Derwent Publications Ltd., London, GB; Class
P75, AN 2002-586717 XP002256307 -& JP 2002
174785 A (RICOH KOGAKU KK), 21 June 2002
(2002-06-21)**
• **PATENT ABSTRACTS OF JAPAN vol. 015, no.
415 (P-1265), 22 October 1991 (1991-10-22) -& JP
03 168715 A (RICOH KOGAKU KK), 22 July 1991
(1991-07-22)**

**Description**

The present invention generally relates to a multi-beam laser image forming apparatus comprising a source of first and second laser beams, photoconductive latent image forming means and a moveable prism means configured such that the separation of the laser beams at the photoconductive latent image forming means can be controlled by movement of the prism means to compensate for convergence of the laser beams.

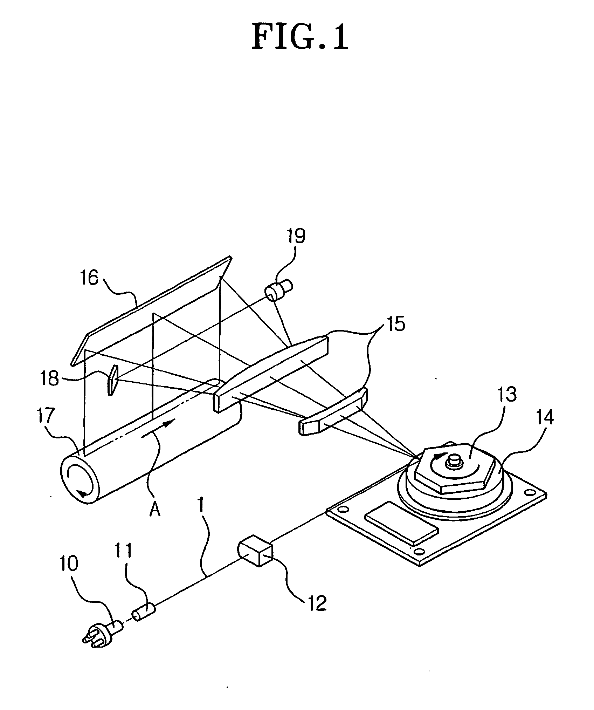

Generally, a laser printer forms an image by directing a laser beam from a laser scanning unit onto a photoreceptor drum in accordance with an image signal to form an electrostatic latent image, developing the electrostatic latent image and transferring the developed image onto a printing medium such as a sheet of paper. An exemplary structure of a laser scanning unit for use in a laser printer is shown in Figure 1.

Referring to Figure 1, a laser scanning unit comprises a laser source 10, a collimating lens 11, a cylindrical lens 12, a polygonal mirror 13, an f-theta lens 15 and a plain mirror 16.

The laser source 10 generates a laser beam 1, usually by means of a laser diode.

The collimating lens 11 collimates the laser beam 1.

The cylindrical lens 12 focuses the collimated laser beam 1 onto the faces of the polygonal mirror 13. The polygonal mirror 13 is rotated by a motor 14 at a constant speed to scan the laser beam 1, from the cylindrical lens 12, horizontally with a constant linear velocity.

The f-theta lens 15 has a predetermined refractivity, deflects the laser beam 1 reflected from the polygon mirror 13 at constant velocity along the main scanning direction (arrow A), and compensates for aberrations, thereby focusing the laser beam 1 on the scanning surface.

The plain mirror 16 reflects the laser beam 1 from the f-theta lens 15 towards the surface of a photoreceptor drum 17 to a form a scanning dot thereon.

Further provided is an optical sensor 19 for horizontal synchronization of the laser beam 1. The optical sensor 19 is provided with a synchronization signal detecting mirror 18, which reflects light from the f-theta lens 15 towards the optical sensor 19.

The above-mentioned components are assembled in a single frame (not shown) to form the laser scanning unit. Furthermore, a transparent glass member (not shown) is attached to an outer side of the frame to prevent foreign substances, such as dust, from being introduced into the laser scanning unit.

There is a demand for ever faster laser printers. In order to increase the printing speed of a laser printer, the rotational speed of the polygonal mirror 13 needs to be increased and, in order to increase the rotational speed, the speed of the motor 11 has to be increased. This, however, has been accompanied by problems such as an increase in noise and a high manufacturing cost due to the requirement for a highspeed motor.

In an attempt to solve the above-mentioned problems, a multi-beam laser scanning unit that has a plurality of light sources has been used. If a multi-beam laser scanning unit having two light sources is employed, the motor 14 driving the polygonal mirror 13 need rotate at only half the speed that would be the case in a single beam scanning unit.

With the multi-beam laser scanning unit, two lines of a given resolution are formed simultaneously on the photoreceptor drum 17 in a perpendicular direction (hereinafter called 'sub-scanning direction') in relation to the main scanning direction.

When the components of the laser scanning unit are assembled, errors inevitably occur due to the correctness of the assembly and the precision of the respective components.

Accordingly, the interval between two lines in the sub-scanning direction can deviate from a nominal interval that is predetermined for the corresponding resolution. This usually causes an undesired phenomenon, called 'jittering', which degrades the sharpness of the printed image.

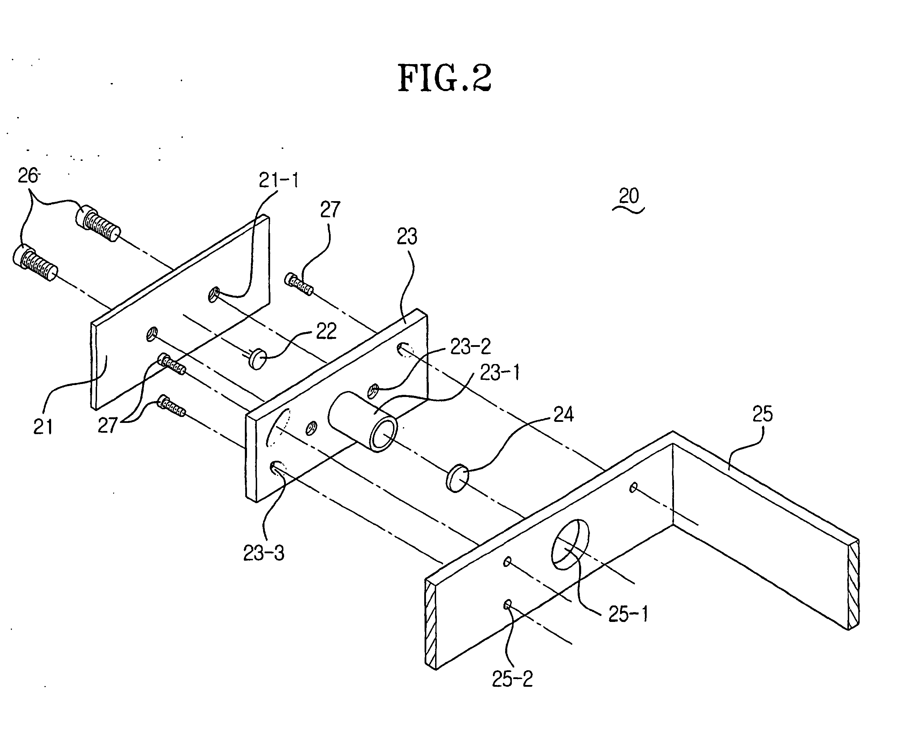

In order to solve the above-mentioned problems, an apparatus 20, as shown in Figure 2, is provided to adjust the interval between the beams in the sub-scanning direction.

Referring to Figure 2, the multi-beam interval adjusting apparatus 20 includes a substrate 21 and a sub-assembly plate 23. A laser diode 22 is mounted to the substrate 21 which also carries a circuit for driving the laser diode 22. The sub-assembly plate 23 has a centrally located lens barrel 23-1 and a plurality of elliptical holes 23-3 which allow the sub-assembly plate 23 to be rotated about the lens barrel 23-1 by a predetermined angle. A collimating lens is assembled into the lens barrel 23-1. Tapped holes 23-2 are formed in the sub-assembly plate 23 for receiving bolts 26 to secure the substrate 21 on the assembling plate 23. The lens barrel 23-1 of the sub-assembly plate 23 is inserted in a hole 25-1 formed in the frame 25 and the sub-assembly plate 23 is fastened to the frame 25 with screws 27. The screws 27 are fastened to the frame 25 through the elliptical holes 23-3 in the sub-assembly plate 23 and screw holes 25-2 in the frame 25. Accordingly, the lens barrel 23-1 of the sub-assembly plate 23 is angularly adjustable with respect to the hole 25-1 in the frame 25.

Accordingly, when a laser beam is emitted from the laser diode 22, the laser beam passes through the lens barrel 23-1 and is incident on the collimating lens 24 which collimates it.

In the case that two laser beams are focused on the photoreceptor drum 17, separated from each other in the sub-scanning direction by a predetermined interval, their separation can be finely adjusted by minutely moving and refastening the sub-assembly plate 23 on the frame using the screws 27.

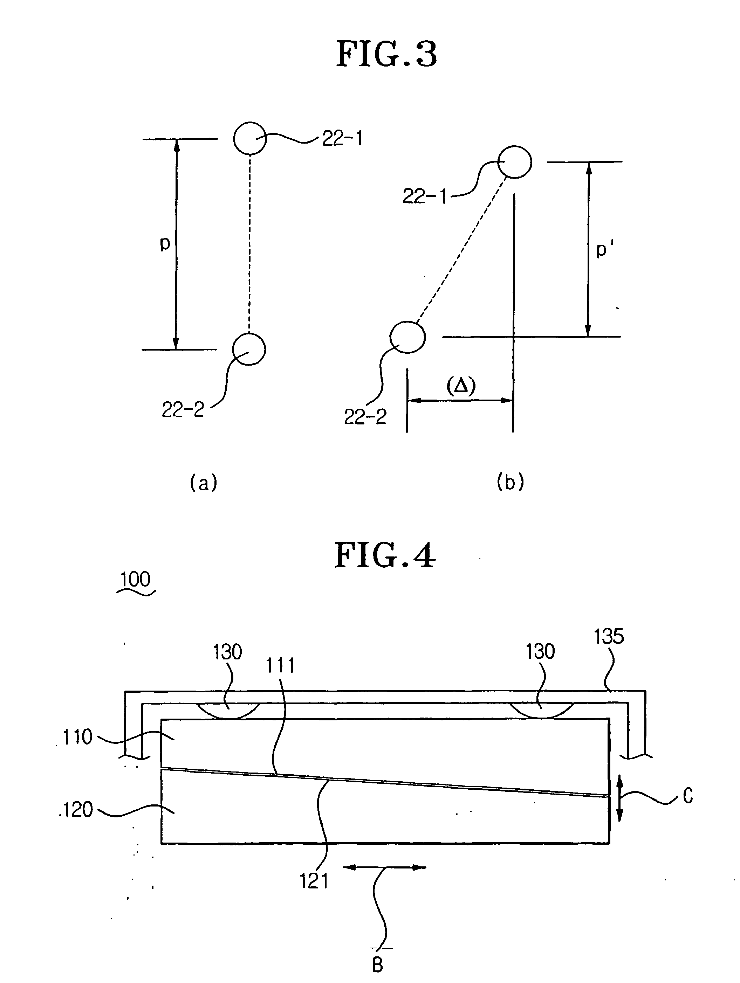

However, the multi-beam interval adjusting apparatus 20 as described above has a shortcoming in that the image formation by the two laser lines in the scanning direction starts at different positions. By way of example, Figure 3(a) shows two laser diodes 22-1, 22-2 that are aligned perpendicular to the scanning direction and separated by interval (p). Ideally, two lines are formed on the photoreceptor drum 17 at the predetermined interval (p). If, however, the two lines are formed at an interval other than the predetermined interval (p), the deviation can be removed by adjusting the interval between the laser diodes. Accordingly, the sub-assembly plate 23 is rotated to correct the interval between the two lines. However, while the interval between the two laser diodes 22-1, 22-2 in the sub-scanning direction becomes p', the laser diodes 22-1, 22-2 deviate from their intended plane in the main scanning direction by a distance ($\Delta$) (see Figure 3(b)). As a result, the image formation in the scanning direction starts differently. Such a problem can be solved by employing software or a device for compensation.

However, employment of the compensation software or device causes the structure of the laser scanning unit to be complex and more expensive to make.

JP-A-2002-174785 discloses an a multi-beam laser image forming apparatus in which a movable prism is used to control the separation between two beams. However, only one of the beams passes through the prism.

An image forming apparatus, according to the present invention, is characterised by the movable prism means is located in the paths of both of said beams and its thickness varies in a first direction such that the first laser beam passes though a thinner part of the prism means than the second beam, and a moveable member for moving the prism means in said first direction such that the paths of the laser beams through the prism means can be increased and decreased thereby.

Preferred and optional features of the present invention are set forth in claims 2 to 8 appended hereto.

Embodiments of the present invention will now be described, by way of example, with reference to Figures 4 to 9 of the accompanying drawings, in which:

Figure 1 shows the structure of a conventional scanning unit;
Figure 2 is an exploded perspective view of an apparatus for adjusting the interval in a sub-scanning direction for a conventional multi-beam scanning unit;
Figure 3(a) and 3(b) are views showing deviations in the starting point of image formation due to the interval adjusting apparatus of Figure 2;
Figure 4 shows an apparatus for adjusting the interval in a sub-scanning direction for a multi-beam scanning unit according to the present invention;
Figure 5 is a side view of the interval adjusting apparatus of Figure 4;
Figure 6 shows the change in the optical path of a laser beam passing through the interval adjusting apparatus of Figure 4;
Figure 7A shows the changes in the optical paths of two parallel laser beams passing through the interval adjusting apparatus of Figure 4;
Figure 7B shows the changes in the optical paths of two non-parallel laser beams passing through the interval adjusting apparatus of Figure 4;
Figure 8 shows another apparatus for adjusting the interval in the sub-scanning direction of a multi-beam scanning unit according to the present invention; and Figure 8 shows another apparatus for adjusting the interval in the sub-scanning direction of a multi-beam laser scanning unit according to the present invention; and
Figure 9 is a side view of the interval adjusting apparatus of Figure 8.

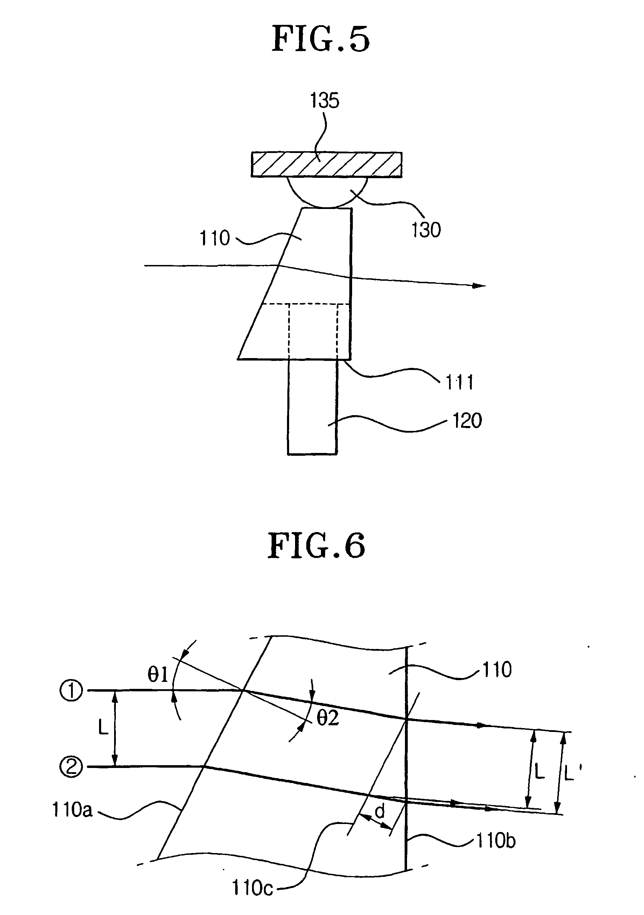

Referring to Figures 4 and 5, a sub-scanning interval adjusting apparatus 100 for a multi-beam laser scanning unit includes a transparent member 110, a movable member 120 and an elastic member 130.

The transparent member 110 is made of a material, such as glass or plastics, through which a laser beam can pass. The transparent member 110 is generally formed by injection moulding. The transparent member 110 has a predetermined optical refractivity greater than 1. The cross-section of the transparent member 110 becomes thinner with height, i.e. the direction (a sub-scanning direction as indicated by arrow C) perpendicular to a laser scanning direction as indicated by arrow B.

Figure 5 shows one example of a structure of the transparent member 110 in section. In this example, the cross-section of the transparent member 110 is a trapezium. Alternatively, the transparent member 110 may be triangular in cross-section. The transparent member 110 has a lower side 111 formed at a predetermined angle with respect to a lengthwise direction (arrow B), i.e. the scanning direction.

The movable member 120 has an upper side 121 formed at an angle corresponding to the angle of the lower side 111 of the transparent member 110. The upper side 121 of the movable member 120 is slidable with respect to the lower side 111 of the transparent member 110. The movable member 120 is also provided with a driving unit (not shown) for moving the movable member 120 leftwards and rightwards, i.e. in the scanning direction (arrow B). Accordingly, as the movable member 120 is moved leftward and rightward, the transparent member 110 is moved upward and downward (the arrow C).

The elastic member 130 is placed on the transparent member 110 and presses the transparent member 110 against the movable member 120. Being secured in a certain position of a frame 135 of a scanning unit, the elastic member 130 also serves to secure the transparent member 110 at a certain position in the path of the laser beam. The elastic member 130 is made of any material that has resilience and a compression spring may be used as the elastic member 130.

The operation of the sub-scanning interval adjusting apparatus for the multi-beam laser scanning unit will now be described.

When two laser beams are focused on a photoreceptor drum 17 (Figure 1) at an interval different from the intended interval, the movable member 120 is moved leftward or rightward, i.e. in the scanning direction (arrow C), by driving the driving unit. If the movable member 120 is moved rightward, the transparent member 110 is moved upward compressing the elastic member 130. If the movable member 120 is moved leftward, the transparent member 110 is moved downward by the elastic member 130. As the transparent member 110 is moved upwards and downwards with respect to the optical paths of the two laser beams, the optical paths are changed by the transparent member 110, and as a result, the interval between the two laser lines can be adjusted.

The principle of adjusting the interval between the two laser lines using the upward and downward movement of the transparent member 110 will now be described in greater detail.

Figure 6 illustrates a process in which the optical path of the laser beam incident on the transparent member 110 changes as the laser beam passes through the transparent member 110. The laser beam passing through the transparent member 110 satisfies the following equation of the Snell's law.

Equation 1

$$\sin \theta1 = n \cdot \sin \theta2$$

where $n$ is a refractive index of the transparent member 110, $\theta1$ is an angle of incidence of the laser beam on the transparent member 110 with respect to an incident surface 110a of the transparent member 110, and $\theta2$ is an angle of refraction of the laser beam entering the transparent member 110.

In Figure 6, an upper laser beam of two laser beams from two laser diodes is indicated as laser beam ① , while a lower laser beam is indicated as laser beam ② . The interval between the two incident laser beams ① , ② is $L$. When the optical paths of the two laser beams ① , ② through the transparent member 110c are the same length, the interval between them remains the same. However, when the optical paths of the two laser beams ① , ② through the transparent member 110b have different lengths, as illustrated in Figure 6, the interval between the two laser beams ① , ② increases from $L$ to $L'$ by an amount corresponding the difference in path length. This is because of different optical distances of optical paths of the two laser beams ① , ② with respect to the a plane 110c parallel to the incident surface 110a of transparent member 110, and an exit surface 110b. The optical distance is obtained by multiplying the refractive index $n$ of a medium by the thickness $d$ of the medium.

Even with a transparent member 110 that is formed with a uniform thickness, a difference between the optical distances of the two laser beams ① , ② occurs if the upper and lower laser beams are not parallel relation to each other when they are incident on the transparent member 110.

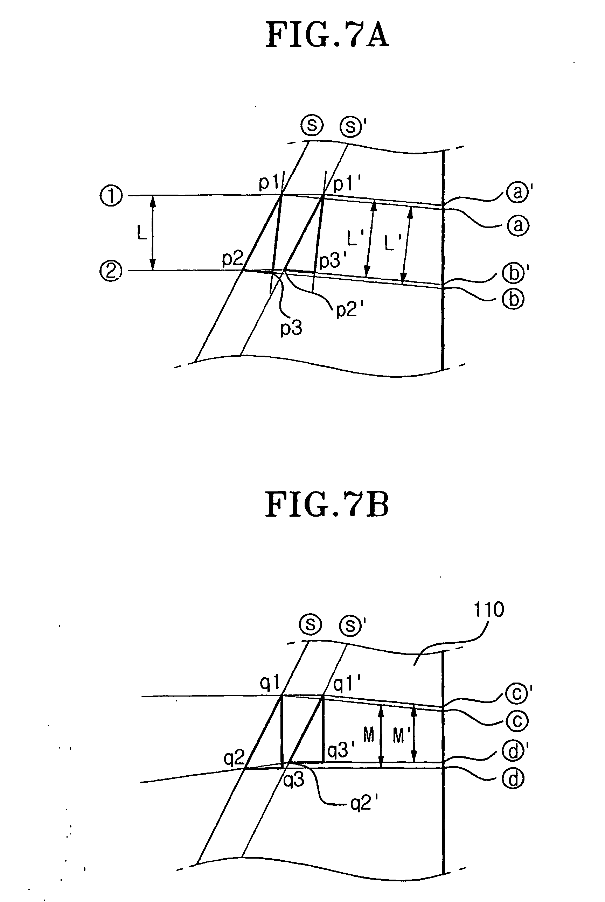

Figure 7A shows the situation where the incident laser beams are parallel. The upper laser beam is indicated by ① and the lower laser beam is indicated by ② . The upper and lower laser beams ① , ② are separated by an interval $L$. With the transparent member 110 at position (s), the laser beams ① , ② pass through the transparent member 110 and exit respectively from points ⓐ , ⓑ . The interval between the exit laser beams is $L'$. Then when the transparent member 110 is moved by the movable member downward to another position ⓢ ', the laser beams ① , ② pass through the transparent member 110 and exit respectively from points ⓐ ', ⓑ '. The interval between the exit laser beams is $L'$. The optical path of the two laser beams varies by p2p3 and p2'p3' depending on the position ⓢ '. As noted from Figure 7A, a triangle p1p2p3 and another triangle p1'p2'p3' are congruent and, thus, the optical paths p2p3 and p2'p3' are identical in length. Accordingly, the interval L' between the two laser beams can be kept constant even when the thickness of the transparent member 110 varies.

Figure 7B shows two non-parallel laser beams being incident on the transparent member 110. The upper laser beam is indicated by ① while the lower laser beam is indicated by ② . With the transparent member 110 at the position ⓢ , the upper and lower laser beams ① , ② pass through the transparent member 110 and exit respectively from the points ⓒ , ⓓ . The interval between the exit laser beams is $M$. Then when the transparent member 110 is moved by the movable member downward to the position ⓢ ', the laser beams ① , ② pass through the transparent member 110 and exit respectively from the points ⓒ ', ⓓ '. The interval between the exit laser beams is $M'$. The optical path of the two laser beams ① , ② varies by q2q3 and q2'q3' depending on the positioning of the transparent member 110 in position ⓢ and position ⓢ '. A triangle q1q2q3 and another triangle q1'q2'q3' are similar shaped but different sized. Accordingly, the optical paths q2q3 and q2'q3' are in the same proportion. That is, as the transparent member 110 varies in thickness, the interval between the laser beams passing through the transparent member 110 also varies. Accordingly, by varying the transparent member 110 in thickness as described above, the interval between the two laser lines on the photoreceptor drum is adjusted to a desired value.

In another embodiment, the sub-scanning interval adjusting apparatus 200 for the multi-beam laser scanning unit includes a transparent member 210, a movable member 220 and an elastic member 230.

The transparent member 210 is made of a material, such as glass or plastics, through which a laser beam can pass. The transparent member 210 is generally formed by injection moulding. The transparent member 210 has a predetermined optical refractive index greater than 1. The cross-section of the transparent member 210 varies in thickness with height (sub-scanning direction; arrow C).

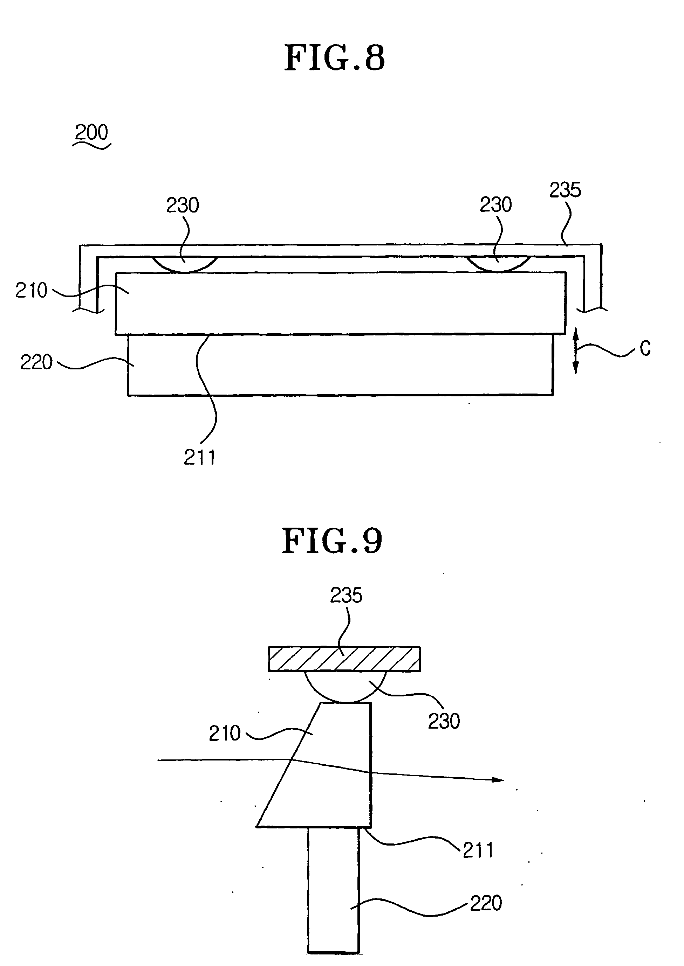

Referring to Figure 9, the cross-section of the transparent member 210 is a trapezium. Alternatively, the transparent member 210 may be triangular in cross-section.

The movable member 220 is formed so as to bear against a lower side 211 of the transparent member 210 and is provided with a driving unit (not shown) for moving it upwards and downwards, i.e. in the sub-scanning direction (arrow C). Accordingly, as the movable member 220 is moved upwards and downwards, the transparent member 210 is moved upwards and downwards (the arrow C). The driving unit may be any suitable device that can reciprocate the movable member 220 linearly accurately. For example, a precision screw device can be used as the driving unit.

The elastic member 230 is placed on the transparent member 210 and presses the transparent member 210 against the movable member 220. Being secured in a certain position of a frame 235 of a scanning unit, the elastic member 230 also serves to secure the transparent member 210 at a certain position in an optical paths of the laser beams. The elastic member 230 is made of any material that has a resilience and a compression spring can be used for the elastic member 130.

The operation of the sub-scanning interval adjusting apparatus 200 for the multi-beam laser scanning unit having the above structure, will now be described.

When two laser lines are concentrated on a photoreceptor drum 17 (Figure 1) at an interval deviated from a predetermined laser line interval, the movable member 220 is moved upwards or downwards, i.e. in the sub-scanning direction, by driving the driving unit. If the movable member 120 is moved downwards, the transparent member 210 is moved downward smoothly by the elastic member 230. As the transparent member 210 is moved upwards and downwards, the lengths of the optical paths through the transparent member 210 change by and as a result, the interval between the two laser lines is changed.

In accordance with the present invention as described above, the interval between the two laser beams can be adjusted with ease, and without varying starting positions of the image formation of the laser beams in the scanning direction.

**Claims**

1. A multi-beam laser image forming apparatus comprising:

   a source (22-1, 22-2) of first and second laser beams;
   photoconductive latent image forming means (17); and
   a moveable prism means (110; 210) configured such that the separation (M, M') of the laser beams at the photoconductive latent image forming means (17) can be controlled by movement of the prism means to compensate for convergence of the laser beams,

   **characterised in that**
   the movable prism means (110; 120) is located in the paths of both of said beams and its thickness varies in a first.direction such that the first laser beam passes though a thinner part of the prism means than the second beam; and
   a moveable member (120; 220) for moving the prism means (110; 210) in said first direction such that the paths of the laser beams through the prism means (110; 210) can be increased and decreased thereby.

2. An apparatus according to claim 1, wherein the prism means (110; 210) has a trapezoidal or triangular cross-section.

3. An apparatus according to claim 1 or 2, comprising an elastic member (130; 230) pressing the prism means (110; 210) against the movable member (120; 220).

4. An apparatus according to claim 1, 2 or 3, wherein the movable members (120) and the prism means (110) are elongate in a second direction, transverse to said beams and said first direction, and have respective complementarily inclined faces (111, 121) which are in contact such that movement of the moveable member (120), relative to the prism means (110), in said second direction moves the prism parallel to said first direction.

5. An apparatus according to any preceding claim, comprising a frame (135; 235) on which the prism means (110; 210) is movably disposed.

6. An apparatus according to any preceding claim, wherein the prism means (110; 220) is made either of glass or of plastic by injection moulding.

7. An apparatus according to claim 6, comprising an elastic member (130; 230) disposed on the frame (135; 235) and pressing the prism means (110; 210) towards the movable member (120; 220).

8. An apparatus according to any preceding claim comprising scanning means (13, 15, 16) for scanning the laser beams from said source (22-1, 22-2) substantially in parallel over the photoconductive latent image forming means (17), wherein the scanning means (13, 15, 16) includes a rotary polygonal mirror (13) and the prism means (110; 210) is elongate in the scanning direction and located between the polygonal mirror (13) and the photoconductive latent image forming means (17).

**Patentansprüche**

1. Mehrfachlaserstrahl-Bilderzeugungsvorrichtung mit:

einer Quelle (22-1, 22-2) eines ersten und eines zweiten Laserstrahls;

einem photoleitfähigen latenten Bilderzeugungsmittel (17); und

einem beweglichen Prismamittel (110, 210), das derart ausgebildet ist, dass der Abstand (M, M') der Laserstrahlen an dem photoleitfähigen, latenten Bilderzeugungsmittel (17) durch Bewegung des Prismamittels gesteuert werden kann, um eine Konvergenz der Laserstrahlen zu kompensieren,

**dadurch gekennzeichnet, dass**
das bewegliche Prismamittel (110, 120) sich in dem Weg beider Strahlen befindet und seine Dicke in einer ersten Richtung derart variiert, dass der erste Laserstrahl durch ein dünneres Teil des Prismamittels verläuft als der zweite Strahl; und
ein bewegliches Element (120, 220) vorgesehen ist zum Bewegen des Prismamittels (110, 210) in der ersten Richtung, so dass die Wege der Laserstrahlen durch das Prismamittel (110, 210) dabei verlängert und verkürzt werden können.

2. Vorrichtung nach Anspruch 1, bei dem das Prismamittel (110, 210) einen trapezoidförmigen oder dreieckförmigen Querschnitt besitzt.

3. Vorrichtung nach Anspruch 1 oder 2, mit einem elastischen Element (130, 230), das das Prismamittel (110, 210) gegen das bewegliche Element (120, 220) drückt.

4. Vorrichtung nach Anspruch 1, 2 oder 3, bei dem das bewegliche Element (120) und das Prismamittel (110) in einer zweiten Richtung transversal zu den Strahlen und der ersten Richtung länglich ausgebildet sind, und jeweilige komplementär geneigte Flächen (111, 121) besitzen, die derart in Kontakt miteinander stehen, dass eine Bewegung des beweglichen Elements (120) relativ zu dem Prismamittel (110) in der zweiten Richtung das Prisma parallel zu der ersten Richtung bewegt.

5. Vorrichtung nach einem der vorhergehenden Ansprüche, mit einem Rahmen (135, 235), auf dem das Prismamittel (110, 210) beweglich angeordnet ist.

6. Vorrichtung nach einem der vorhergehenden Ansprüche, bei dem das Prismamittel (110, 210) entweder aus Glas oder einem Kunststoff durch Spritzgießformen hergestellt ist.

7. Vorrichtung nach Anspruch 6, mit einem elastischen Element (130, 230), das auf dem Rahmen (135, 235) angeordnet ist und das Prismamittel (110, 210) zu dem beweglichen Element (110, 220) hin drückt.

8. Vorrichtung nach einem der vorhergehenden Ansprüche, mit einem Scanningmittel (13, 15, 16) zum Scannen der Laserstrahlen von der Quelle (22-1, 22-2) im Wesentlichen parallel oberhalb des fotoleitfähigen, latenten Bilderzeugungsmittels (17), bei dem das Scanningmittel (13, 15, 16) einen drehbaren Polygonalspiegel (13) umfasst, und das Prismamittel (110, 210) in der Scanningrichtung länglich ausgebildet ist und sich zwischen dem Polygonalspiegel (13) und dem photoleitfähigen, latenten Bilderzeugungsmittel (17) befindet.

**Revendications**

1. Appareil de formation d'image laser multifaisceaux comprenant :

une source (22-1, 22-2) de premier et deuxième faisceaux laser ;
des moyens photoconducteurs de formation d'image latente (17) ; et
un moyen à prisme mobile (110 ; 210) configuré de telle sorte que la séparation des faisceaux laser au niveau des moyens photoconducteurs de formation d'image latente (17) peut être commandée par le mouvement du moyen à prisme pour compenser la convergence, des faisceaux laser,

**caractérisé en ce que**
le moyen à prisme mobile (110 ; 120) est placé dans les trajets des deux faisceaux et son épaisseur varie dans une première direction telle sorte que la partie du moyen à prisme traversée par le premier faisceau laser est plus mince que celle traversée par le deuxième faisceau ; et

un élément mobile (120 ; 220) destiné à déplacer le moyen à prisme (110 ; 210) dans ladite première direction de telle sorte que les trajets des faisceaux laser dans le moyen à prisme (110 ; 210) peut ainsi être augmenté ou diminué.

2. Appareil selon la revendication 1, dans lequel le moyen à prisme (110 ; 210) a une section trapézoïdale ou triangulaire.

3. Appareil selon la revendication 1 ou 2, comprenant un élément élastique (130 ; 230) pressant le moyen à prisme (110 ; 210) contre l'élément mobile (120 ; 220).

4. Appareil selon la revendication 1, 2 ou 3, dans lequel l'élément mobile (120) et le moyen à prisme (110) sont allongés dans une deuxième direction, transversalement auxdits faisceaux et à ladite première direction, et présente des faces respectives inclinées de façon complémentaire (111, 121) qui sont en contact de telle sorte que le déplacement de l'élément mobile (120), par rapport au moyen à prisme (110), dans ladite deuxième direction, déplace le prisme parallèlement à ladite première direction.

5. Appareil selon l'une quelconque des revendications précédentes, comprenant un châssis (135 ; 235) sur lequel le moyen à prisme (110 ; 210) est placé de façon mobile.

6. Appareil selon l'une quelconque des revendications précédentes, dans lequel le moyen à prisme (110 ; 220) est fabriqué à partir d'une matière plastique par moulage par injection.

7. Appareil selon la revendication 6, comprenant un élément élastique (130 ; 230) placé sur la châssis (135 ; 235) et pressant le moyen à prisme (110 ; 210) en direction de l'élément mobile (120 ; 220).

8. Appareil selon l'une quelconque des revendications précédentes comprenant des moyens de balayage (13, 15, 16) destinés au balayage des faisceaux laser provenant de ladite source (22-1, 22-2) sensiblement parallèlement sur les moyens photoconducteurs de formation d'image latente (17), les moyens de balayage (13, 15, 16) incluant un miroir polygonal rotatif (13) et le moyen à prisme (110; 210) étant allongé dans la direction de balayage et est placé entre le miroir polygonal (13) et les moyens photoconducteurs de formation d'image la-

tente (17).

# FIG.1

FIG.2

# FIG.3

(a)

(b)

# FIG.4

# FIG.5

135

130

110

111

120

# FIG.6

①

θ1

θ2

L

②

110a

L

L'

d

110

110b

110c

# FIG.7A

# FIG.7B

# FIG.8

200

230                    230        235

210

220

211

C

# FIG.9

235

210

230

211

220